# EUROPEAN PATENT APPLICATION

(11) **EP 4 640 614 A1**
(43) Date of publication of application: **29.10.2025**
(21) Application number: 24172633.0
(22) Date of filing: 26.04.2024
(51) Int. Cl.: B66C 13/40, B25J 9/00, B60N 2/75, B66C 13/54, B66C 13/56, B66C 23/00, E02F 3/43, E02F 9/16, E02F 9/20, G05B 13/00, G05G 9/047

(54) **WORKING EQUIPMENT PROVIDED WITH MEANS FOR REDUCING IMPACT OF MOVEMENTS WHEN CONTROLLING THE WORKING EQUIPMENT**

(71) Applicant: Hiab AB, 215 32 Malmö (SE)
(72) Inventor: Näslund, David, SE-187 73 Täby (SE); Kedra, Rafal, PL-73-110 Grzedzice (PL)
(74) Representative: Bjerkén Hynell KB

(57) **Abstract**

A working equipment (2) comprising a movable arm (8) arranged at a base on a vehicle, an operator control assembly (10) comprising an operator carrier (12) for an operator of the working equipment (2), and a manoeuvring unit (14) comprising a set of control members (16) arranged to receive input commands from the operator for movements of the moveable arm (8) and to generate input command signals (18) in dependence of received input commands. The working equipment (2) further comprises a control system (20) arranged to generate control signals (22) for the movements of the movable arm (8) in dependence of input commands from the operator, wherein at least one of said control members (16), has a designated movement capability. The working equipment (2) comprises an acceleration measurement unit (24) arranged to measure accelerations in at least one dimension, and to generate an acceleration signal (26) comprising acceleration values. The working equipment (2) further comprises a signal processing unit (28) configured to receive said input command signals (18) from the at least one control member (16), and said acceleration signal (26), and further configured to process said input command signal (18) by using the acceleration values and the movement capability related to the at least one control member (16) to compensate for movements of the operator control assembly (10) affecting the movements applied by input commands to the control members (16), and to generate a processed input command signal (30) that is applied to said control system (20).

## Description

### Technical field

The present disclosure relates to a working equipment, and a method of using a working equipment, and particularly a working equipment being a crane, e.g. forestry or recycling cranes provided with a top seat or cabin, where the crane operator's interaction with the manoeuvring unit takes place while being at a position on the crane.

### Background

The present disclosure generally relates to handle movements of a vehicle provided with a working equipment, e.g. a crane, and specifically directed to reducing the impact of these movement when controlling the working equipment.

A typical example is that an operator carrier is arranged at the working equipment and comprises e.g. a seat that is normally attached to e.g. a crane structure. When the crane shakes, also the seat carrying an operator at the operator carrier will shake, and when the seat shakes, the operator involuntarily may move the control members, e.g. the joysticks, of a manoeuvring unit. This will generate movements of the crane that possibly makes everything shake and move even more. One way of handling this is to filter the output signals from the control members. The applied filters have a good impact for reducing the shaking but a negative impact of the possibility to make fast controlled movements.

In the following, some documents will be identified and briefly discussed, that disclose related technology.

CN111501866A discloses an excavator vibration reduction method and device and an excavator, and relates to the technical field of engineering machinery. The excavator vibration reduction method comprises the vibration reduction step used for reducing vibration caused by a movable arm.

CN212248468U discloses a cab damping system and an excavator, and relates to the technical field of cab damping. The system comprises a cab, a rotary platform, a damping device, a first acceleration sensor and a controller, the damping device is arranged between the cab and the rotary platform, the first acceleration sensor is arranged on the rotary platform, and the controller is electrically connected with the damping device and the first acceleration sensor. A first acceleration sensor is used for collecting first acceleration of the rotary platform, and a controller is used for adjusting damping of the damping device according to the first acceleration. Due to the fact that the first acceleration can comprehensively reflect vibration, caused by road surface conditions, excavator working conditions and the like, of the cab, damping of the damping device is adjusted according to the first acceleration, vibration of the cab can be effectively reduced, the comfort of the cab is improved, and the fatigue degree of an operator is reduced.

CN104071706B discloses a crane assembly comprising a vibration inhibition controller and an acceleration sensor, wherein the acceleration sensor is used for acquiring the actual acceleration of a crane in the process of hoisting goods, and the vibration inhibition controller generates a vibration inhibition signal capable of counteracting the actual acceleration according to the actual acceleration The crane assembly is capable of effectively inhibiting vibration generated in the process of hoisting the goods, so that the goods can be accurately placed in a target position.

The object of the present invention is to reduce the impact of movements of a working equipment arranged on a vehicle when controlling the working equipment.

### Summary

The above-mentioned objects are achieved by the present invention according to the independent claims.

Preferred embodiments are set forth in the dependent claims.

The present invention is advantageous as the working environment for the operator will be greatly improved as the operator carrier movements will be subjected to less shaking and disturbing movement. This will in turn lead to improved controllability of the working equipment because the reduced shaking will lead to less involuntary movements of control members, which also improves the efficiency and the possibility for fine tuning of a working tool.

The working equipment according to the present invention, and the method of using the working equipment, is particularly applicable for cranes, and is specifically applicable on forestry and recycling cranes provided with a top seat or cabin, where the crane operator's interaction with the manoeuvring unit takes place while being at a position on the crane. The reason is that the top seat or cabin is a dynamic operating environment where forces from the cranes movements of the load is propagating to the crane operator and the top seat or cabin through the crane structure. The operator interacts with a manoeuvring unit e.g. an electrical joystick, that is typically placed at the top seat or cabin in these installations.

The solution is advantageous in forestry and recycling cranes equipped with top seats and electrical joysticks as the problem which the present invention intends to solve is common and might lead to dangerous situations.

Thus, the present invention provides for different signal processing of the input command signals when acceleration signals are detected, compared to when no acceleration signals are detected. The signal processing will compensate for accelerations resulting in movements by determining vectors in direction of control member movements, and to add or decrease input member signal in dependence thereto.

This will also lead to improved controllability when no movements are detected, in comparison to the presently used systems of generally damping the input command signal, as no processing of the input command signals will then be required.

According to one embodiment, a signal processing is applied where acceleration values are determined, and if acceleration detected in a direction of a control member movement being higher than a predetermined threshold, the input command signal during the time period of acceleration is not used as long as the acceleration signal is above the threshold, and the input command signal level before start of the period of detected acceleration above the threshold is used during the time period, i.e. as long as the acceleration continues.

### Brief description of the drawings

Figure 1 is a schematic illustration of a vehicle provided with a working equipment according to the present invention.
Figure 2 is a side view of a part of a working equipment being a crane provided with an operator carrier embodied as a seat.
Figure 3 is a side view of a part of a working equipment being a crane provided with an operator carrier embodied as a cabin.
Figure 4 is a block diagram schematically illustrating the working equipment according to the present invention.
Figure 5 is a perspective view of one type of a manoeuvring unit applicable herein.
Figure 6 is a perspective view of another type of a manoeuvring unit applicable herein.
Figure 7 is a perspective view of an operator carrier, being a seat, applicable herein.
Figure 8 is a flow diagram of a method of using the working equipment disclosed herein.
Figure 9 is a flow diagram illustrating an embodiment of the method according to the present invention.

### Detailed description

The working equipment, and the method of using the working equipment, will now be described in detail with references to the appended figures. Throughout the figures the same, or similar, items have the same reference signs. Moreover, the items and the figures are not necessarily to scale, emphasis instead being placed upon illustrating the principles of the invention.

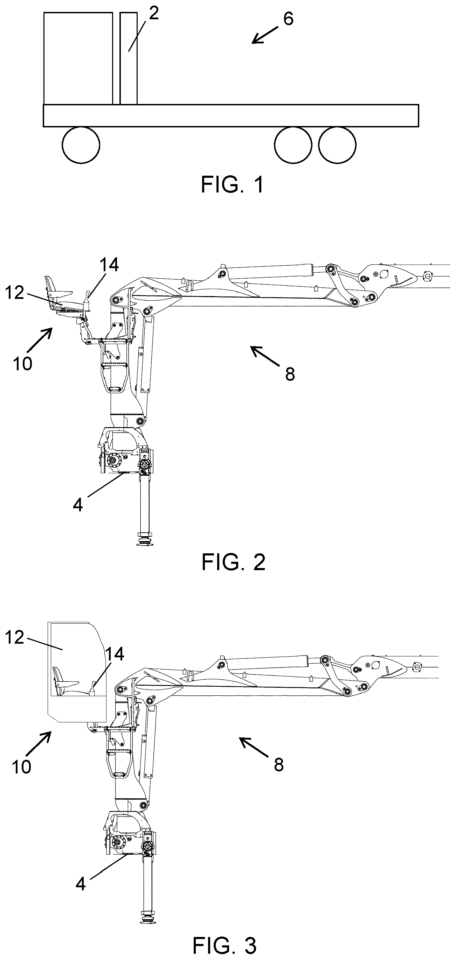

Figure 1 shows a schematic illustration of a vehicle 6 provided with a working equipment 2 according to the present invention. The working equipment may be e.g. a loader crane, a forestry crane, or a recycling crane.

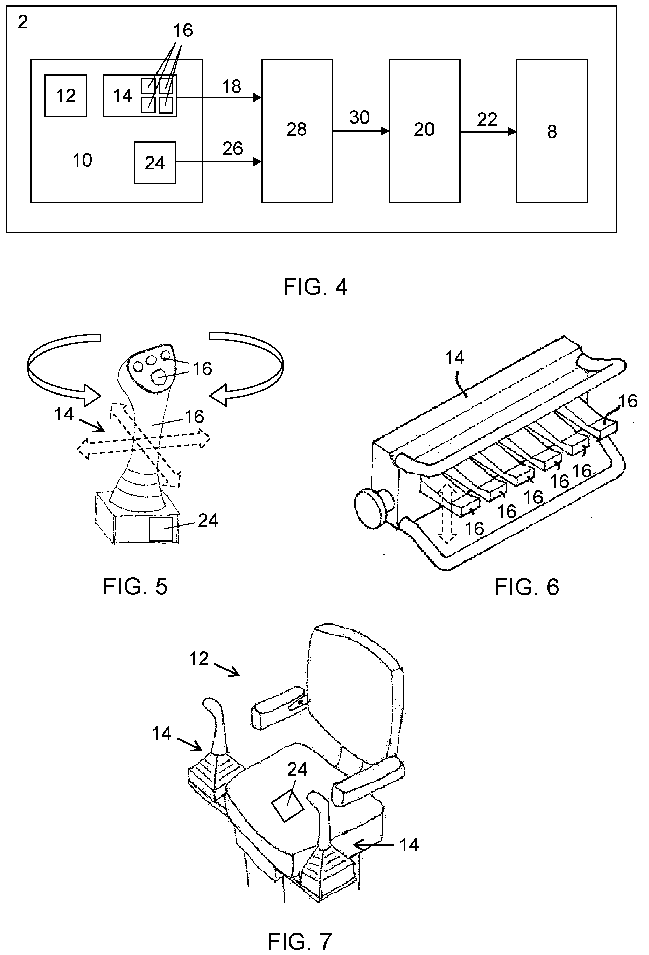

With references to figures 2 and 3, the working equipment 2 comprises a base 4 arranged to be mounted to the vehicle 6, a movable arm 8 arranged at the base 4, an operator control assembly 10 comprising an operator carrier 12 for an operator of the working equipment 2, and a manoeuvring unit 14 comprising a set of control members 16 (see figures 4 and 5) arranged to receive input commands from the operator for movements of the moveable arm 8 and to generate input command signals 18 (see figure 4) in dependence of received input commands.

With references to the block diagram shown in figure 4, the working equipment 2 further comprises a control system 20 arranged to generate control signals 22 for the movements of the movable arm 8 in dependence of input commands from the operator. At least one of the control members 16, has a designated movement capability defining one or many of e.g. a direction of a movement, a movement range, and an angular movement that the control member 16 is capable to perform in dependence of received input commands.

The expression movement capability, being the physical movement(s) that the control member 16 is capable to perform in dependence of received input commands, i.e. the physical movement the operator makes of a control member, will be further described below in relation to figures 5 and 6.

The working equipment 2 comprises an acceleration measurement unit 24 arranged to detect movements of the operator control assembly 10, and particularly to measure accelerations in at least one dimension, and to generate an acceleration signal 26 comprising acceleration values, in dependence of the measured accelerations.

The working equipment 2 further comprises a signal processing unit 28 configured to receive the input command signals 18 from the at least one control member 16, and the acceleration signal 26.

The signal processing unit 28 is further configured to process the input command signal 18 by using the acceleration values and the movement capability related to the at least one control member 16 to compensate for movements of the operator control assembly 10 affecting the movements applied by input commands to the control members 16. The processing unit 28 is also configured to generate a processed input command signal 30 that is applied to the control system 20, that in turn is configured to generate the control signals 22 in dependence of the processed input command signal 30.

According to an embodiment, the signal processing unit 28 is configured to process the input command signal 18 by using the acceleration values by calculating acceleration vector values along a movement trajectory performed by the control member 16 defined by its designated movement capability.

In a further embodiment, the signal processing unit 28 is configured to compare calculated acceleration vector values along a present movement trajectory of a control member 16 with a predetermined threshold value, or many predetermined threshold values.

More particularly, this is calculated by determining when an acceleration is detected, the direction and amplitude of that acceleration, and then, if necessary, split up the determined acceleration vector in vector components aligning with the direction(s) of the movement capabilities, e.g. movement directions, of the control member. If the amplitude of the vector components aligned with a movement direction is greater than a predetermined threshold value, the input command signal, related to the movement direction of the control member will be processed, e.g. damped, compensated, or filtered, in the direction that the movement would move the operator.

The strength of the damping, compensating, or filtering may be related to the amplitude of the acceleration. The result is that this processing will remove unwanted fast movements of the crane and that will result in less shaking of the driver.

Preferably, during time periods when the acceleration vector value is greater than the threshold value, the signal processing unit 28 is configured to determine the processed input command signal 30 to be related to the input command signal 18, received by the signal processing unit 28, immediately before the acceleration vector value exceeded the threshold value.

In another embodiment, the signal processing unit 28 is configured to determine the processed input command signal 30 to be set to essentially the same value as the input command signal 18 had when the acceleration vector value exceeded the threshold value, and to keep the value during the entire time period the acceleration vector value exceeds the threshold value.

In still another embodiment, the signal processing unit 28 is configured to determine the processed input command signal 30 by determining the first derivative of the input command signal 18 immediately before the acceleration vector value exceeded the threshold value. And further, to control the processed input command signal 30 to continue to change according to the first derivative during the entire time period the acceleration vector value exceeds the threshold value.

According to a further embodiment, the processed input command signals 30 are determined by increasing or decreasing input command signal values by the calculated acceleration vector values.

In an advantageous embodiment, applicable to all embodiments described herein, the designated movement capability, and the accelerations measured by said acceleration measurement unit 24, are defined in a common coordinate system, preferably defined in relation to the operator control assembly.

The acceleration measurement unit 24 is preferably mounted at the operator carrier 12, and that the operator carrier 12 may be a seat, a platform, a cabin, or a stand. The acceleration measurement unit 24 may e.g. be mounted in or under a seat for the operator, see figure 7. It is important that the acceleration measurement unit 24 is mounted anywhere at the operator control assembly 10 such that it is subjected to the same movement as an operator positioned at the operator carrier 12 is subjected to. One further possible placement is illustrated in figure 5, where the acceleration measurement unit 24 is mounted at a socket of the manoeuvring unit 14.

One applicable accelerometer is a micromachined microelectromechanical systems (MEMS) accelerometer that e.g. is used in handheld electronic devices such as smartphones, cameras and video-game controllers to detect movement and orientation of these devices.

The acceleration measurement unit 24 is configured to measure accelerations in one, two, or three dimensions. The acceleration measurement unit 24 may include one or many acceleration sensors.

A single-axis accelerometer measures acceleration along a specified axis. A multi-axis accelerometer detects both the magnitude and the direction of the proper acceleration, as a vector quantity, and is usually implemented as several single-axis accelerometers oriented along different axes. In order to measure acceleration in three dimensions, three single-axis accelerometers are provided oriented along different axes being perpendicular to each other.

The signal processing unit 28 may be separate from the control system 20, which is illustrated in the block diagram shown in figure 4, or may be an integral part of the control system 20.

Providing the signal processing unit 28 as a separate part from the control system 20, may be advantageous because the signal processing unit 28, e.g. enclosed in a specific enclosure, easily may be plugged into an already existing control system 20, thus, no hardware changes of the control system would be required.

In one embodiment, as illustrated in figures 2 and 3, the movable arm 8 is a crane arm. The crane arm may include one or many arms, e.g. being telescopically extended, and provided with a crane tip where an operating tool may be mounted, e.g. a forestry tool, a fork, or a loader hook. The crane arm may further be rotatably arranged at the base of the working equipment allowing for rotating movements in addition to the pivoting movements of the different parts of the crane arm.

As discussed above, at least one of the control members 16 of the manoeuvring unit 14, has a designated movement capability defining one or many of e.g. a direction of a movement, a movement range, and an angular movement that the control member 16 is capable to perform in dependence of received input commands.

Figures 5 and 6, schematically illustrates two different types, of many, of the manoeuvring unit 14 applicable herein.

Figure 5 is a schematic perspective view of one type of a manoeuvring unit 14 applicable in the working equipment. In the figure, block arrows are shown to illustrate directions of movements that the manoeuvring unit is capable to perform. The manoeuvring unit 14 is of a joystick type that essentially may perform movements in two dimensions, backwards and forwards, and left and right, respectively illustrated by dashed block arrows, and also rotational movements (solid-lined block arrows).

Figure 6 is a schematic perspective view of another type of a manoeuvring unit 14 with a number of control members 16 for controlling different functions of the working equipment, e.g. for controlling different crane functions. In this type, each control member is movable in only one dimension, forward and rearward, which is illustrated by a dashed block arrow.

In one variation, the manoeuvring unit 14, e.g. of the type illustrated in figure 6, may be detachably mountable to the operator control assembly 10, e.g. at the operator carrier 12. Thus, the manoeuvring unit 14 is a portable unit. The operator control assembly 12 is then provided with an attachment in order to allow the manoeuvring unit 14 to be carried by the operator control assembly. EP3415460 discloses a load handling crane with a high seat and a portable manoeuvring unit, where the present invention would be applicable.

In figure 7 is shown a schematic perspective illustration of an operator carrier 12 being an operator seat. Two manoeuvring units 14 are mounted in connection to the seat. An acceleration measurement unit 24 is arranged in the seat.

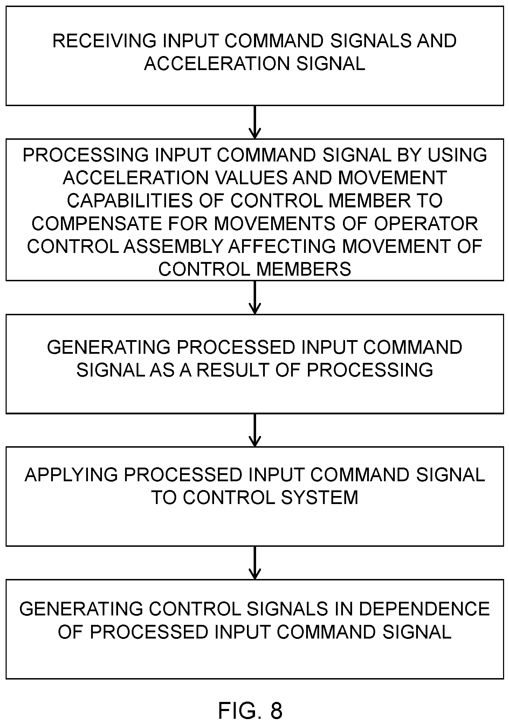

The present invention also relates to a method of using a working equipment as defined above. The working equipment, and different embodiments of the equipment, have been described in detail above and it is herein referred to that description. The method will now be described with references to the flow diagram shown in figure 8.

Thus, the method comprises:
- receiving, by the signal processing unit 28, the input command signals 18 and the acceleration signal 26;
- processing the input command signal 18 by using acceleration values of the acceleration signal and the movement capability related to the at least one control member 16 to compensate for movements of the operator control assembly 10 affecting the movements applied by input commands to the control members 16;
- generating a processed input command signal 30 as a result of said processing,
- applying the processed input command signal 30 to the control system 20, and
- generating, by the control system 20, control signals 22 in dependence of said processed input command signal 30.

In the following, some embodiments of the method are listed. These have the same technical features and advantages as for the corresponding features of the working equipment described above. Consequently, these technical features and advantages are not repeated or explained anew in order to avoid unnecessary repetition.

According to one embodiment, the method further comprises processing the input command signal 18 by using the acceleration values by calculating acceleration vector values along a movement trajectory performed by the control member 16 defined by its designated movement capability. In addition, the method according to this embodiment, further comprises determining the processed input command signals 30 by increasing or decreasing input command signal values by the calculated acceleration vector values.

According to another embodiment, the method further comprises:
- processing the input command signal 18 by using the acceleration values by calculating acceleration vector values along a movement trajectory performed by the control member 16 defined by its designated movement capability;
- comparing calculated acceleration vector values along a present movement trajectory of a control member 16 with a predetermined threshold value, and
- during time periods when the acceleration vector value is greater than the threshold value, determining the processed input command signal 30 to be related to the input command signal 18, received by the signal processing unit 28, immediately before said acceleration vector value exceeded the threshold value.

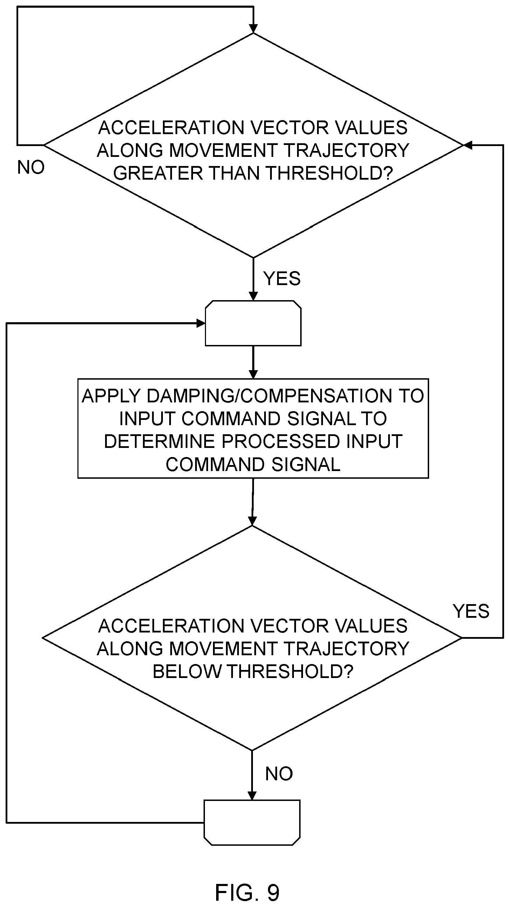

Figure 9 is a flow chart illustrating important aspects of embodiments of the method according to the present invention.

The acceleration measurement unit continuously measures the acceleration and generates acceleration vector values. These values are compared to one or many thresholds related to the movement trajectory performed by the control member, e.g. the joystick. The movement trajectory is dependent on the movement capabilities of the control member, i.e. the available movement directions that the control member may apply. If the acceleration vector values are below the threshold, i.e. NO in the first alternative box, it means that any detected movement will not influence the input command signals. If the acceleration vector values are greater than the threshold, i.e. YES in the first alternative box, the detected movement will influence the input command signals and damping/compensation will then be applied by the signal processing unit in order to reduce the impact of the movements, and thus generate a processed input command signal. This processing is continued until it is determined that the acceleration vector values are below the threshold, illustrated by NO in the second alternative box.

The illustrated flow chart is simplified and further activities may be included. One such activity may be to include a timeout procedure to end damping/compensation if a maximum time has lapsed.

The present invention is not limited to the above-described preferred embodiments. Various alternatives, and modifications may be used. Therefore, the above embodiments should not be taken as limiting the scope of the invention, which is defined by the appending claims.

## Claims

1. A working equipment (2) comprising a base (4) arranged to be mounted to a vehicle (6), a movable arm (8) arranged at the base (4), an operator control assembly (10) comprising an operator carrier (12) for an operator of the working equipment (2), and a manoeuvring unit (14) comprising a set of control members (16) arranged to receive input commands from the operator for movements of the moveable arm (8) and to generate input command signals (18) in dependence of received input commands, the working equipment (2) further comprises a control system (20) arranged to generate control signals (22) for the movements of the movable arm (8) in dependence of input commands from the operator, wherein at least one of said control members (16), has a designated movement capability defining one or many of e.g. a direction of a movement, a movement range, and an angular movement that the control member (16) is capable to perform in dependence of received input commands, the working equipment (2) comprises an acceleration measurement unit (24) arranged to detect movements of the operator control assembly (10), and particularly to measure accelerations in at least one dimension, and to generate an acceleration signal (26) comprising acceleration values, in dependence of the measured accelerations, **characterized in that** the working equipment (2) further comprises a signal processing unit (28) configured to receive said input command signals (18) from the at least one control member (16), and said acceleration signal (26), the signal processing unit (28) is further configured to process said input command signal (18) by using the acceleration values and the movement capability related to the at least one control member (16) to compensate for movements of the operator control assembly (10) affecting the movements applied by input commands to the control members (16), and to generate a processed input command signal (30) that is applied to said control system (20), that in turn is configured to generate said control signals (22) in dependence of said processed input command signal (30).

2. The working equipment (2) according to claim 1, wherein the signal processing unit (28) is configured to process said input command signal (18) by using the acceleration values by calculating acceleration vector values along a movement trajectory performed by said control member (16) defined by its designated movement capability.

3. The working equipment (2) according to claim 2, wherein said signal processing unit (28) is configured to compare calculated acceleration vector values along a present movement trajectory of a control member (16) with a predetermined threshold value.

4. The working equipment (2) according to claim 3, wherein, during time periods when said acceleration vector value is greater than said threshold value, the signal processing unit (28) is configured to determine the processed input command signal (30) to be related to the input command signal (18), received by the signal processing unit (28), immediately before said acceleration vector value exceeded said threshold value.

5. The working equipment (2) according to claim 4, wherein the signal processing unit (28) is configured to determine the processed input command signal (30) to be set to essentially the same value as the input command signal (18) had when the acceleration vector value exceeded said threshold value, and to keep said value during the entire time period the acceleration vector value exceeds said threshold value.

6. The working equipment (2) according to claim 4, wherein the signal processing unit (28) is configured to determine the processed input command signal (30) by determining the first derivative of the input command signal (18) immediately before the acceleration vector value exceeded said threshold value, and to control said processed input command signal (30) to continue to change according to said first derivative during the entire time period the acceleration vector value exceeds said threshold value.

7. The working equipment (2) according to claim 2, wherein said processed input command signals (30) are determined by increasing or decreasing input command signal values by said calculated acceleration vector values.

8. The working equipment (2) according to any of claims 1-7, wherein said designated movement capability, and the accelerations measured by said acceleration measurement unit (24), are defined in a common coordinate system, preferably defined in relation to said operator control assembly.

9. The working equipment (2) according to any of claims 1-8, wherein said acceleration measurement unit (24) is mounted at said operator carrier (12), and wherein said operator carrier (12) is a seat, a platform, a cabin, or a stand.

10. The working equipment (2) according to any of claims 1-9, wherein said signal processing unit (28) is separate from said control system (20), or is an integral part of said control system (20).

11. The working equipment (2) according to any of claims 1-10, wherein the movable arm (8) is a crane arm.

12. The working equipment (2) according to any of claims 1-11, wherein the acceleration measurement unit (24) is configured to measure accelerations in one, two, or three dimensions.

13. A method of using a working equipment according to any of claims 1-12, **characterized in that** said method comprises:
- receiving, by said signal processing unit (28), said input command signals (18) and said acceleration signal (26),
- processing said input command signal (18) by using acceleration values of said acceleration signal and the movement capability related to the at least one control member (16) to compensate for movements of the operator control assembly (10) affecting the movements applied by input commands to the control members (16),
- generating a processed input command signal (30) as a result of said processing,
- applying said processed input command signal (30) to said control system (20), and
- generating, by said control system (20), control signals (22) in dependence of said processed input command signal (30).

14. The method according to claim 13, wherein the method further comprises processing said input command signal (18) by using the acceleration values by calculating acceleration vector values along a movement trajectory performed by said control member (16) defined by its designated movement capability, and by determining said processed input command signals (30) by increasing or decreasing input command signal values by said calculated acceleration vector values.

15. The method according to claim 13, wherein the method further comprises:
- processing said input command signal (18) by using the acceleration values by calculating acceleration vector values along a movement trajectory performed by said control member (16) defined by its designated movement capability,
- comparing calculated acceleration vector values along a present movement trajectory of a control member (16) with a predetermined threshold value, and
- during time periods when said acceleration vector value is greater than said threshold value, determining the processed input command signal (30) to be related to the input command signal (18), received by the signal processing unit (28), immediately before said acceleration vector value exceeded said threshold value.
